# EUROPEAN PATENT APPLICATION

(11) **EP 1 480 141 A2**
(43) Date of publication of application: **24.11.2004**
(21) Application number: 04252613.7
(22) Date of filing: 05.05.2004
(51) Int. Cl.: G06F 17/30

(54) **Document sharing in a distributed server system**

(30) Priority: 19.05.2003 US 440720
(71) Applicant: LUCENT TECHNOLOGIES INC., Murray Hill, New Jersey 07974-0636 (US)
(72) Inventor: Keli, Han, Naperville Illinois 60563 (US); Ren, Lu, Aurora Illinois 60504 (US); Zhongjin, Yang, Naperville Illinois 60565 (US); Jie, Yao, Naperville Illinois 60565 (US); Joe, Ping Zhou, Naperville Illinois 60565 (US)
(74) Representative: Watts, Christopher Malcolm Kelway, Dr.

(57) **Abstract**

Separate file servers are located in different geographic areas to serve users in each area. A centralized system manager with communication links to the file servers and users controls documents stored in the file servers. The system manager must approve each request by a user to download a document from a local file server. If the requested document is not stored at the local file server, the system manager will cause the requested document to be transferred from another file server to the local file server for access by the user. Documents being accessed by users are locked thereby denying access to other users until the current access by another user of the sought document is terminated.

## Description

### Background

This invention relates to a document storage system in which documents must be accessible to users geographically separated by substantial distances on a substantially real-time basis.

Various types of document storage systems exist. In one example documents are stored in a centralized database to which users are connected by communication channels. A security system validates users such as by the use of passwords and permits validated users to access and retrieve documents stored in the database. Documents that are in the process of being modified by a user are typically locked from access by other users until the modification and storage of the modified document is completed. The Dynamic Object Oriented Requirements System (DOORS) is a centralized document processing system. Where large documents are accessed by users that are geographically separated by substantial distances, such systems may become slow and inefficient. Thus, there exists a need for an improved document processing system to overcome these and other problems.

### Summary of the Invention

It is an object of the present invention to provide an improved method for processing documents that minimizes these problems.

In accordance with an embodiment of the present invention, separate file servers are located in different geographic areas to serve users in each area. A centralized system manager with communication links to the file servers and users controls documents stored in the file servers. The system manager must approve each request by a user to download a document from a local file server. If the requested document is not stored at the local file server, the system manager will cause the requested document to be transferred from another file server to the local file server for access by the user. If a document is being accessed by a user, the document will be locked thereby denying access to other users until the current access is terminated.

### Brief Description of the Drawings

Figure 1 is a block diagram of an embodiment of a document processing system in accordance with the present invention.
Figure 2 is a block diagram of an architecture common to the system manager and file servers as shown in figure 1.
Figure 3 is a flow diagram illustrating an embodiment of a method in accordance with the present invention.

### Detailed Description

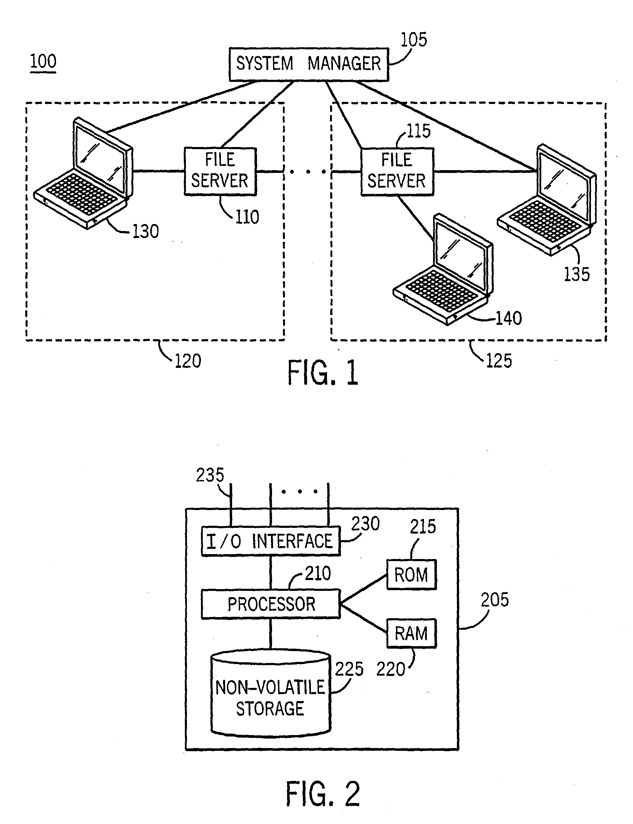

In figure 1, an embodiment of a document handling system 100 includes a system manager 105 that is connected by communication channels and supports exemplary file servers 110 and 115. File server 110 serves users in geographic area 120 while file server 115 serves other users in geographic area 125. The file servers are connected to each other by communication channels. A user's personal computer in geographic area 120 is connected by a communication channel with file server 110. In order to simplify the description, the user and the user's personal computer will be denoted by the same reference numeral since it will be clear from the context whether the user or the user's personal computer is intended. Users with personal computers 135 and 140 are connected by communication channels with file server 115 in geographic area 125. The users require communications with the system manager 105 and can be directly coupled by communication lines to the system manager as are users 130 and 135, or can be indirectly connected by file servers to the system manager such as user 140 that is connected by file server 115 to system manager 105. Although only two file servers are shown in two respective geographic areas, system 100 may comprise a large number of different geographic areas that are supported by respective file servers. Further, each geographic area may be served by more than one file server such as to increase document handling and throughput capacity in the area or provide redundancy to enhance reliability. A substantial plurality of users in each geographic area will be served by the respective file server(s) in that area.

In the illustrative system 100, documents are stored in the distributed file servers with access and control of the documents being provided by the system manager 105. Preferably, a single system manager provides a centralized access and control function for all users and file servers. As used herein, documents refer to electronic files of user data to which the users desire access from time to time. For example, the electronic files may contain text information such as utilized with word processing programs or source code listings, numerical information such as utilized with spreadsheet programs, collections of data such as utilized with database programs, graphical images such as utilized by various types of graphical and photographic programs, and in general any form of digitized information that a user may desire to create, modify, and provide access to others.

As mentioned above, a centralized document server system may become slow and inefficient especially where users are geographically distributed over great distances. It is believed that the long distance transmission of documents from such a centralized document server system through relatively complicated Internet protocol (IP) networks is a substantial contributor to this problem. Normally, long distance data transmission over an IP network requires that the data traverse a substantial number of nodes connected by communication channels with various bandwidth capabilities. The slowest node and/or communication channel becomes the weakest link in the chain and constrains data throughput. For example, a centralized document server located in Great Britain may provide desirable access times to users located in Great Britain, acceptable access times to users located in Continental Western Europe, and unacceptably slow access times to users located in the United States. This problem is more pronounced as the size of the document becomes larger, i.e. as bandwidth demand increases.

The exemplary system 100 in accordance with the present invention seeks to minimize such problems by utilizing geographically distributed file servers so that the number of nodes and communication channels between a user and the user's associated file server are limited to achieve a predefined data transfer rate between the user and the user's associated file server. An acceptable data transfer rate may vary depending upon the average size of documents to be accessed and the frequency with which users need to access the documents. For example, geographic area 120 may be configured so that file server 110 supports users within about 50 miles of Chicago, Illinois and geographic area 125 may be configured so that file server 115 supports users within Great Britain, where substantial real-time access is desired and where the average document size is about 1 Megabyte.

In system 100 documents primarily accessed by users in geographic area 120 are stored in the file server 110 while documents primarily accessed by users in geographic area 125 are stored in file server 115. The file server in the area having the greater probability of having users desiring access to the document will normally be selected to store the document. The system manager 105 validates users, accepts requests from users seeking to access all or part of a specific document, determines the availability of a document for access, and controls the modification of documents. Users may be assigned a log-in and password by the system manager in order to authenticate users. Because more than one user may desire to access the same document during the same time interval, the system manager will lock a document while it is being accessed by a first user in order to prevent the concurrent access to the document by other users. Depending upon the nature of the document and the management controls desired, the entirety of a document may be locked while being accessed by a user or a document may be segregated into sections wherein concurrent access is controlled by locking individual sections. As used herein, a "document" means an entire document or a segregated part of a larger document. Once the system manager provides a user with permission to access a document, a copy of the document is normally downloaded from the associated file server to the user's PC while the original document file is maintained at the file server and is locked to prevent a concurrent use. If the user is authorized to make modifications and makes changes to an accessed copy of a document, the changes are transmitted to the file server containing the original of the document where the original document is updated to incorporate the changes before permitting the document or section of the document to be accessed. If user 130 desires access to a document stored on file server 115, the system manager upon receiving the request from the user will send a communication directing file server 115 to transmit a copy of the document to file server 110 where user 130 will obtain access to the requested document. In order to minimize the delay in obtaining access to documents located in a remote file server, it is desirable for the file servers to be connected by communication channels having sufficient throughput to maintain the delay to an acceptable level. For example, the file servers may be connected by a private network or a virtual private network in order to ensure desired bandwidth availability.

Figure 2 is a block diagram of an architecture that is suitable for the file servers and system manager. A device 205 includes a microprocessor 210 that is supported by read only memory (ROM) 215, random access memory (RAM) 220, and nonvolatile data storage 225 that may comprise a hard drive. An input/output (I/0) interface 230 is coupled to microprocessor 210 and provides a communication interface between the microprocessor and communication channels 235. The microprocessor operates under stored control instructions normally stored in ROM 215 and in the nonvolatile data storage element 225 that are transferred during active operation to RAM 220. Where device 205 is utilized as a file server, the nonvolatile data storage element 225 should have a data storage capacity sufficient to accommodate documents which will be stored for access by users. Where device 205 is utilized as the system manager, the data storage elements will contain instructions permitting interactive communications with users and file servers, and will provide command instructions to the file servers relating to documents stored in the file servers; it will also contain a database with records for each document to facilitate accessing and modifying of the documents and for authenticating users.

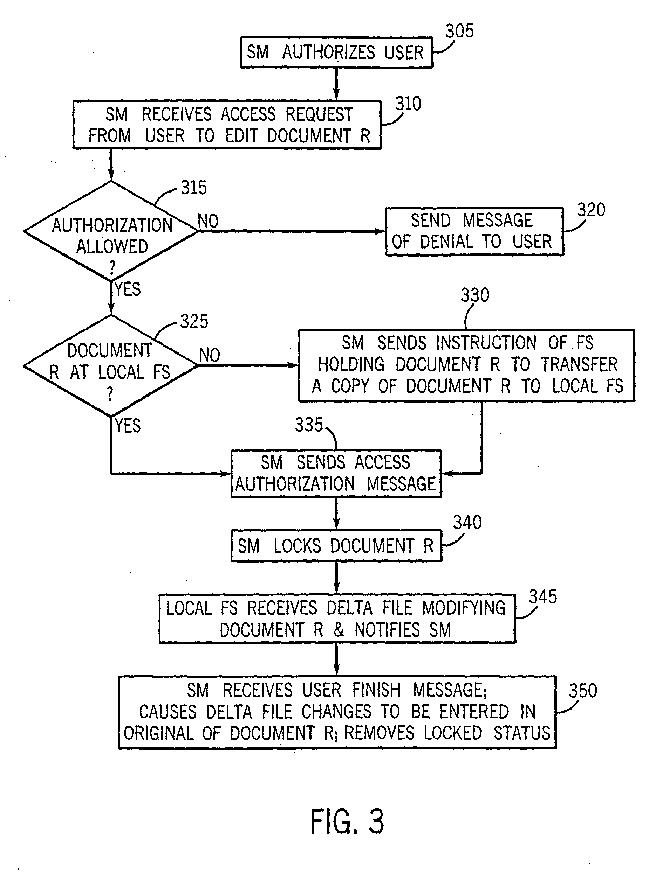

Figure 3 is a flow diagram illustrating an exemplary method in accordance with the present invention. In step 305 the system manager (SM) authorizes a user. The user logs into the system and provides a user identification code and a password to the SM. The SM checks the user records and validates access to the system by the user. The log in process may be either through direct communication channels between the user and the SM, or through an indirect path such as through a file server (FS). The SM determines the geographic area of the user either by reference to the user's record stored in the SM or by information transmitted by the user as part of the login process. The SM receives a message from the user requesting access and editing permission of document R at step 310. In step 315 the SM makes a determination of whether the request from the user will be allowed. This determination will be based on whether document R exists, whether access to document R is permitted at this time, and whether the user is authorized to access and edit the requested document. They NO determination results in the SM sending a message of denial to the user at step 320, thereby ending the process. A YES determination by step 315 results in the SM making a further determination at step 325 of whether the requested document R is at the local FS, i.e. the FS located in the same geographic area as the requesting user. The local FS is determined by the SM since the geographic area of the user is already known to the SM. A NO determination results in the SM sending instructions to the file server containing document R causing a copy of the document R to be transferred to the local FS.

Step 335 is reached following step 330 and following a YES determination at step 325 (document R was initially available at the local FS). In step 335 the SM sends an access authorization message to the user and to the local file server permitting the user to proceed and instructing the local file server to permit access by this user. The user will then proceed to download the document R to the user's PC for review and editing. Although this example makes reference to the user accessing and editing the entire document R, the user may only need access to and desire to edit a predefined section of entire document. In this situation the user will initially request the specific section required and the system manager and file server will consider the specific section requested with regard to access and permissions. In step 340 the SM locks document R against further accessing and transmits corresponding messages to the file server(s) involved with document R. In step 345 the local FS receives from the user the modified document R and notifies the SM. Preferably, the user will transmit only the minimum amount of information needed to identify the changes made to the document R to the FS in order to conserve bandwidth such as using a delta file that contains the changes. In step 350 the SM receives a completion or finish message from the user indicating that the user has completed the review and editing of document R. The finish message preferably includes an indication of whether the user has made any amendments to the document. The SM sends a message to the local FS instructing the FS to cause the changes by the user to be entered into the original document R. The SM also stores a record associated with each document identifying the status of the document, and the date and users that have made changes to the document. If the document R is not normally stored at the local FS, the SM will instruct the local FS to transfer the document R to the FS in which it is normally stored. The SM will remove the lock status of document R thereby making document R again accessible.

It will be apparent to those skilled in the art that various changes and modifications can be made to the embodiments within the scope of the invention. Although the system manager is shown as a separate element in Figure 1, it could be physically embodied in one of the file servers. The embodiment of present invention minimizes delays associated with the ability of the user to access a document and provides the user with the ability to access large documents in substantially real-time. System efficiency as well as user efficiency and productivity are enhanced. Although an embodiment of the invention has been described above and shown in the drawings, the scope of the invention is defined by the claims that follow.

## Claims

1. A method for providing access to documents stored in a system comprising the steps of:
utilizing a separate file server located in each different geographic area of coverage, wherein a file server in a first geographic area directly supports users in the first geographic area;
storing the documents in the file servers;
employing a centralized system manager with communication links to the file servers and users, the system manager storing user data and records representing the status and location of each document;
receiving at the system manager a request from a first user to access a first document;
determining by the system manager whether the requested first document is available to be accessed at a first file server that is in the same geographic area as the first user;
in response to the determination that the requested first document is available to be accessed at a first file server that is in the same geographic area as the first user, granting by the system manager permission for the first user to download the first document;
locking the first document to prevent access by other users by the system manager;
upon receipt by the system manager of a message indicating that the first user has finished accessing the first document, unlocking the first document to allow it to be accessed by other users.

2. The method according to claim 1 further comprising the step of validating the authority of users to utilize the system based on user records stored in the system manager.

3. The method according to claim 1 wherein the step of storing comprises storing each document in a file server that is in the geographic area that supports users with the greatest probability of requiring access to the document.

4. The method according to claim 1 wherein only a single centralized system manager is employed.

5. The method according to claim 1 wherein the step of determining comprises determining whether the requested first document is available to be accessed at an other file server that is not the first file server, and if the requested first document is available to be accessed at an other file server, the system manager transmitting a command to the other file server causing the requested document to be transferred to the first file server.

6. The method according to claim 5 upon receipt by the system manager of the message indicating that the first user has finished accessing the first document, the system manager transmitting a further command to the first file server causing the requested document to be transferred from the first file server to the other file server.

7. The method according to claim 1 further comprising the steps of amending the first document downloaded by the user, transmitting from the user to the first file server a delta file that represents changes made by the user to the first document, and incorporating by the first file server the contents of the delta file into the first document, thereby causing amendments made to the first document by the user to become part of the first document as stored at the first file server.

8. The method according to claim 7 wherein the step of determining comprises determining whether the requested first document is available to be accessed at an other file server that is not the first file server, and if the requested first document is available to be accessed at an other file server, the system manager transmitting a command to the other file server causing the requested document to be transferred to the first file server.

9. The method according to claim 8 upon receipt by the system manager of the message indicating that the first user has finished accessing the first document, the system manager transmitting a further command to the first file server causing the requested document to be transferred from the first file server to the other file server.

10. The method according to claim 1 wherein said message received by the system manager indicating that the first user has finished accessing the first document also includes an indication of whether the user has made any amendments to the first document, and storing by the system manager in a record associated with the first document status data identifying the day and user making said amendments.
